(19) Europäisches Patentamt
European Patent Office
Office européen des brevets

(11) Veröffentlichungsnummer: **0 309 405 B1**

(12) **EUROPÄISCHE PATENTSCHRIFT**

(45) Veröffentlichungstag der Patentschrift: **01.06.94**

(51) Int. Cl.$^5$: **D06P 3/10**, D06P 1/38, C09B 62/01

(21) Anmeldenummer: **88810629.1**

(22) Anmeldetag: **15.09.88**

Die Akte enthält technische Angaben, die nach dem Eingang der Anmeldung eingereicht wurden und die nicht in dieser Patentschrift enthalten sind.

(54) **Verfahren zum Färben oder Bedrucken von Fasermaterial aus natürlichen oder synthetischen Polyamiden mit Reaktivfarbstoffen.**

(30) Priorität: **21.09.87 CH 3625/87**

(43) Veröffentlichungstag der Anmeldung:
**29.03.89 Patentblatt 89/13**

(45) Bekanntmachung des Hinweises auf die Patenterteilung:
**01.06.94 Patentblatt 94/22**

(84) Benannte Vertragsstaaten:
**BE CH DE ES FR GB IT LI**

(56) Entgegenhaltungen:
**EP-A- 0 112 797**
**EP-A- 0 126 026**
**EP-A- 0 131 543**
**EP-A- 0 131 545**
**US-A- 3 910 758**

(73) Patentinhaber: **CIBA-GEIGY AG**
**Klybeckstrasse 141**
**CH-4002 Basel(CH)**

(72) Erfinder: **Mäusezahl, Dieter, Dr.**
**Langgartenstrasse 19**
**CH-4105 Biel-Benken(CH)**
Erfinder: **Loew, Peter, Dr.**
**Concordiastrasse 23**
**CH-4142 Münchenstein(CH)**

**EP 0 309 405 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zum Färben oder Bedrucken von natürlichen oder synthetischen Polyamidfasermaterialien mit sulfogruppenhaltigen Reaktivfarbstoffen.

Reaktivfarbstoffe werden seit langem in grossem Umfang für das Färben oder Bedrucken von Textilien aus Fasermaterialien eingesetzt. Angesichts der steigenden Anforderungen an Reaktivfärbungen in bezug auf Wirtschaftlichkeit, Applikationstechnik und Echtheitsniveau ist der erreichte technische Stand vielfach nicht voll befriedigend.

Gegenstand der vorliegenden Erfindung ist ein Verfahren zum Färben oder Bedrucken von natürlichen oder synthetischen Polyamidfasermaterialien mit sulfogruppenhaltigen Reaktivfarbstoffen, welches dadurch gekennzeichnet ist, dass man diese Fasermaterialien mit Reaktivfarbstoffen der Formel

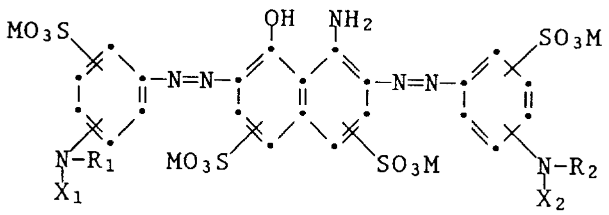

(1),

worin M je ein Kation, $R_1$ und $R_2$ unabhängig voneinander Wasserstoff oder $C_1$-$C_4$-Alkyl und $X_1$ und $X_2$ unabhängig voneinander $\alpha,\beta$-Dibrompropionyl oder $\alpha$-Bromacryloyl bedeuten, aus wässriger Flotte nach dem Ausziehverfahren färbt, oder bedruckt. Als Farbstoffe kommen in den erfindungsgemässen Verfahren auch Mischungen der Farbstoffe der Formel (1) in Betracht.

Das erfindungsgemässe Verfahren liefert überraschenderweise faser-und flächenegale Färbungen bzw. Drucke mit scharfen Konturen, die sich auszeichnen durch den guten Echtheitsstandard, insbesondere gutes Aufzieh- und Fixiervermögen auch in grösserer Farbtiefe, sowie durch gute Lichtechtheit in tiefen Tönen.

Die Mengen, in denen die definierten Reaktivfarbstoffe in den Färbebädern oder Druckpasten verwendet werden, können je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

In den definierten Reaktivfarbstoffen der Formel (1) bedeutet das Kation M beispielsweise Wasserstoff, ein Alkalimetallkation, wie z.B. ein Lithium-, Kalium- oder vorzugsweise Natriumkation, oder Ammonium, oder M ist der Rest eines organischen Amins, z.B. der Rest des Triäthanolamins, und $R_1$ und $R_2$ als $C_1$-$C_4$-Alkyl bedeuten unabhängig voneinander Methyl, Aethyl, Propyl, Isopropyl, n-Butyl, sek.-Butyl, Isobutyl oder tert.-Butyl. Vorzugsweise haben $R_1$ und $R_2$ gleiche Bedeutungen. Insbesondere bedeuten $R_1$ und $R_2$ Wasserstoff.

Eine ganz besonders bevorzugte Ausführungsform des erfindungsgemässen Verfahrens ist dadurch gekennzeichnet, dass man Reaktivfarbstoffe der Formel

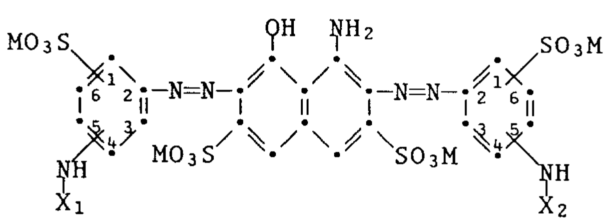

(2),

verwendet, worin M, $X_1$ und $X_2$ die unter Formel (1) angegebenen Bedeutungen haben. Insbesondere ist der Rest -$SO_3M$ an jeden der beiden Benzolkerne in 1-Stellung gebunden. Insbesondere ist der Rest -NH-$X_1$ und der Rest -NH-$X_2$ in 4-Stellung an den jeweiligen Benzolkern gebunden.

Eine weitere besonders bevorzugte Ausführungsform des erfindungsgemässen Verfahrens ist dadurch gekennzeichnet, dass man Reaktivfarbstoffe der Formel (1), und insbesondere solche der Formel (2), verwendet, worin $X_1$ und $X_2$ identische Bedeutungen haben.

Eine ebenfalls ganz besonders bevorzugte Ausführungsform des erfindungsgemässen Verfahrens ist dadurch gekennzeichnet, dass man Reaktivfarbstoffe der Formel (1), insbesondere der Formel (2), verwendet, worin $X_1$ und $X_2$ je $\alpha,\beta$-Dibrompropionyl oder $\alpha$-Bromacryloyl ist.

Eine ganz besonders wichtige Ausführungsform des erfindungsgemässen Verfahrens ist dadurch gekennzeichnet, dass man einen Reaktivfarbstoff der Formel

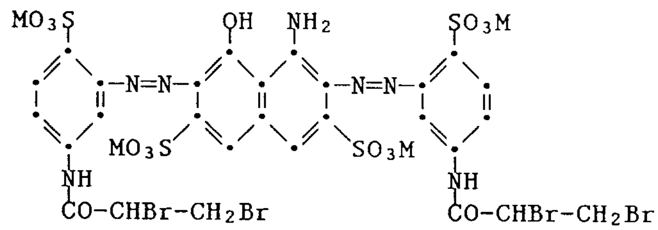

(3)

verwendet, worin M die unter Formel (1) angegebene Bedeutung hat.

Als textiles Fasermaterial aus natürlichen Polyamiden, das erfindungsgemäss gefärbt oder bedruckt werden kann, sind vor allem Wolle, aber auch Mischungen aus Wolle/Polyamid, Wolle/Polyester, Wolle/Cellulose oder Wolle/Polyacrylnitril sowie Seide zu erwähnen. Das Fasermaterial kann dabei in den verschiedensten Aufmachungsformen vorliegen, wie z.B. als loses Material, Kammzug, Garn und Stückware oder als Teppich.

Als Fasermaterial aus synthetischen Polyamiden, das erfindungsgemäss gefärbt oder bedruckt werden kann, kommt solches aus allen bekannten, dafür geeigneten synthetischen Polyamiden in Betracht. Das Fasermaterial kann dabei in den verschiedensten Aufmachungsformen vorliegen, wie z.B. als loses Material, Kammzug, Stapel- oder Endlos-Garn und Stückware oder als Teppich.

Vorzugsweise wird in dem erfindungsgemässen Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druck-apparate und -maschinen, beispielsweise für Flocke, Kammzug, Stranggarn, Wickelkörper, Stückware und Teppiche verwendet werden.

Die Färbebäder können neben dem Reaktivfarbstoff noch Hilfsmittel enthalten.

Die in dem erfindungsgemässen Verfahren verwendbaren Hilfsmittel sind an sich bekannt und werden nach bekannten Methoden hergestellt. Vorzugsweise handelt es sich um Egalisierhilfsmittel oder Mischungen verschiedener Egalisierungshilfsmittel; dabei kommen anionaktive Mittel, kationaktive Mittel, nichtionogene Mittel und amphotere Mittel oder deren Mischungen in Betracht.

Als anionaktive Mittel seien beispielsweise genannt: substituierte Naphthalinsulfonsäuren, Schwefelsäurehalbester von Aethoxylierungsprodukten, Salze von längerkettigen Alkansulfonsäuren, Salze von Alkylarylsulfonsäuren, insbesondere Dodecylbenzolsulfonsäuren, Fettsäure-amidsulfonsäuren, Schwefelsäurehalbester von Fettamin-polyglykoläthern. Als kationaktive Mittel seien beispielsweise genannt: Polyglykoläther der Fettamine, Polyglykoläther der Fettsäureamidamine, quaternäre Ammoniumverbindungen. Als nichtionogene Mittel seien beispielsweise genannt: Polyglykoläther von Alkylphenolen, von Harzsäuren, von Fettsäurealkylolamiden. Als amphotere Mittel seien beispielsweise genannt: Reaktionsprodukte von äthoxylierten Fettaminen und Hydroxyäthansulfonsäuren, Reaktionsprodukte aus Phenol und Styrol, Polyäthylenglykoldifettsäureester.

Vorzugsweise verwendet man Egalisierhilfsmittel enthaltend Verbindungen der Formel

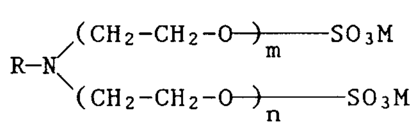

(4), oder

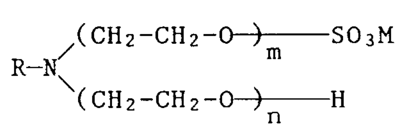

(5),

worin R einen Alkyl- oder Alkenylrest mit 12 bis 22 Kohlenstoffatomen bedeutet, M die unter Formel (1) angegebene Bedeutung hat und m und n ganze Zahlen bedeuten, wobei die Summe von m und n 2 bis 14 ist, oder der Formel

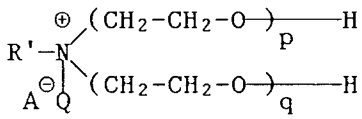

(6),

worin R' unabhängig von R die für R angegebene Bedeutung hat, A ein Anion, Q einen gegebenenfalls substituierten Alkylrest und p und q ganze Zahlen bedeuten, wobei die Summe von p und q 2 bis 50 ist, oder der Formel

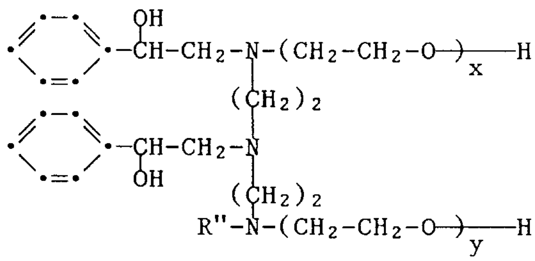

(7)

worin R'' unabhängig von R die für R angegebene Bedeutung hat und x und y ganze Zahlen bedeuten, wobei die Summe von x und y 80 bis 140 ist, eine Mischung enthaltend Verbindungen der Formel (5) und (6) oder eine Mischung enthaltend Verbindungen der Formeln (5), (6) und (7) oder eine Mischung enthaltend Verbindungen der Formeln (4), (6) und (7).

Mit Vorteil verwendet man eine Verbindung der Formel (6), worin sich A und Q von den Quaternisierungsmitteln Chloracetamid, Aethylenchlorhydrin, Aethylenbromhydrin, Epichlorhydrin, Epibromhydrin oder Dimethylsulfat ableiten.

Bevorzugt ist die Verwendung eines Egalisierhilfsmittelgemisches, welches die Verbindungen der Formeln (5) und (6) enthält, worin die Summe der Symbole p und q in Formel (6) 4 bis 10 ist.

Ganz besonders bevorzugt verwendet man in den erfindungsgemässen Verfahren ein Egalisierhilfsmittelgemisch, enthaltend die Verbindung der Formel (5), worin R ein $C_{16}$-$C_{18}$-Alkylrest und m + n = 7 oder 8 ist, und die Verbindung der Formel (6), worin R' ein $C_{20}$-$C_{22}$-Alkylrest, A und Q sich von dem Quaternisierungsmittel Chloracetamid ableiten, und p + q = 7 bis 8 ist.

Insbesondere enthält das ganz besonders bevorzugte Egalisierhilfsmittelgemisch 20 bis 30 Gewichtsteile der Verbindung der Formel (5), und 20 bis 30 Gewichtsteile der Verbindung der Formel (6), worin p + q = 7 oder 8 ist bezogen auf 100 Teile des Egalisierhilfsmittelgemisches.

Die Menge, in der das Egalisierhilfsmittel oder das Egalisierhilfsmittelgemisch in den Färbebädern verwendet wird, kann in weiten Grenzen schwanken, im allgemeinen hat sich eine Menge von 0,3 bis 3 Gewichtsprozent, vorzugsweise 1 bis 2 Gewichtsprozent, bezogen auf das Fasermaterial, an Egalisierhilfsmittel oder Egalisierhilfsmittelgemisch als vorteilhaft erwiesen.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisen-, Essig- oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6 insbesondere 4,2 bis 5,3.

Ferner kann die Färbeflotte verschiedene Salze, insbesondere Ammoniumoder Alkalisalze wie z.B. Ammoniumsulfat oder Natriumsulfat als Hilfsmittel enthalten. Vorzugsweise werden 1 bis 10 Gewichtsprozent Ammonium- oder Alkalisalze, bezogen auf das Fasermaterial, verwendet.

Die Färbebäder können noch weitere Zusätze wie z.B. Wollschutz-, Netz- und Entschäumungsmittel enthalten.

Das Flottenverhältnis kann innerhalb eines weiten Bereichs gewählt werden, von 1:6 bis 1:80, vorzugsweise 1:10 bis 1:50.

Das Färben erfolgt aus wässriger Flotte nach dem Ausziehverfahren z.B. bei Temperaturen zwischen 80 und 105 °C bzw. 110 °C bei Verwendung eines Formaldehyd-abspaltenden Wollschutzmittels, vorzugsweise zwischen 98 und 103 °C.

Die Färbedauer beträgt in der Regel 30 bis 120 Minuten.

Eine bevorzugte Ausführungsform des erfindungsgemässen Verfahrens ist dadurch gekennzeichnet, dass man Wolle nach der Ausziehmethode färbt.

Eine besonders bevorzugte Ausführungsform des erfindungsgemässen Verfahrens ist dadurch gekennzeichnet, dass man nach dem Färben bei vorzugsweise 98 bis 103 °C die Färbeflotte abkühlen lässt auf ca. 75 bis 90 °C und den pH-Wert auf 8 bis 9, vorzugsweise auf ca. 8,5, einstellt. Die Einstellung des pH-Wertes kann mit üblichen Mitteln erfolgen, z.B. Alkalihydroxide, Alkalikarbonate und -hydrogenkarbonate sowie insbesondere mit wässriger Ammoniaklösung üblicher Konzentration, z.B. 25 Gewichtsprozent Ammoniak enthaltend, oder Hexamethylentetramin.

Eine ganz besonders bevorzugte Ausführungsform des erfindungsgemässen Verfahrens ist dadurch gekennzeichnet, dass man das Hilfsmittelgemisch enthaltend die Verbindungen der Formeln (5) und (6) der wässrigen Flotte zumischt und gleichzeitig mit dem Farbstoff appliziert. Man kann auch so vorgehen, dass man das Färbegut zuerst mit dem Hilfsmittelgemisch behandelt und im gleichen Bad nach Zugabe des Reaktivfarbstoffs färbt.

Vorzugsweise geht man mit dem Fasermaterial, insbesondere Wolle, in eine Flotte ein, die Säure, Ammoniumsulfat und das Hilfsmittelgemisch enthält und eine Temperatur von 30 bis 70 °C aufweist. Anschliessend wird der Reaktivfarbstoff der Formel (1), insbesondere der Formel (2) oder (3), zugegeben und die Temperatur des Färbebades mit einer Aufheizrate von 0,5 bis 3 °C pro Minute, gegebenenfalls mit einem Temperaturstop während des Aufheizens, gesteigert, um im angegebenen Temperaturbereich von 98 bis 103 °C zu färben. Am Schluss wird das Bad abgekühlt auf ca. 75 bis 90 °C und nach Zugabe einer ausreichenden Menge wässriger Ammoniaklösung, um den pH-Wert auf ca. 8,5 zu stellen, während 10 bis 20 Minuten behandelt. Dann wird das Bad abgekühlt und das gefärbte Material wie üblich gespült und getrocknet.

Nach beendetem Färben sind die Färbebäder nahezu vollständig ausgezogen.

Die in dem erfindungsgemässen Verfahren eingesetzten Reaktivfarbstoffe sind teilweise bekannt.

Die Reaktivfarbstoffe der Formel (1) werden hergestellt, indem man z.B. einen Disazofarbstoff der Formel

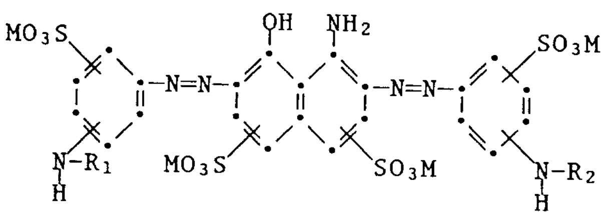

(8),

worin M, $R_1$ und $R_2$ die unter Formel (1) angegebenen Bedeutungen mit einer den Rest $X_1$ und einer den Rest $X_2$ einführenden Verbindung kondensiert.

Eine weitere Ausführungsform zur Herstellung der Verbindungen der Formel (1) ist dadurch gekennzeichnet, dass man ein Phenylendiamin der Formel

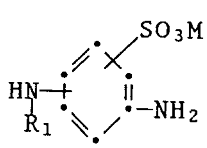

(9)

worin M und $R_1$ die unter Formel (1) angegebenen Bedeutungen haben, mit einer den Rest $X_1$ einführenden Verbindung kondensiert, das Kondensationsprodukt diazotiert und auf eine Verbindung der Formel

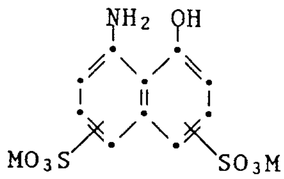

(10),

worin M die unter Formel (1) angegebene Bedeutung hat, kuppelt, und auf den gebildeten Monoazofarbstoff eine diazotierte Diazokomponente eines Amins der Formel

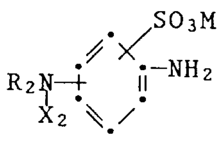

(11)

worin M, $R_2$ und $X_2$ die unter Formel (1) angegebenen Bedeutungen haben, kuppelt.

Als Amine der Formel (9) kommen z.B. in Betracht: 1,3-Phenylendiamin-4-sulfonsäure, 1,4-Phenylendiamin-2-sulfonsäure.

Als Kupplungskomponenten der Formel (10) kommen z.B. in Betracht: 1-Amino-8-hydroxynaphthalin-3,6-disulfonsäure, 1-Amino-8-hydroxynaphthalin-4,6-disulfonsäure.

Als Amin der Formel (11) kommt z.B. in Betracht: 1-Amino-3($\alpha$,$\beta$-dibrompropionylamino)-benzol-4-sulfonsäure.

Als Rest $X_1$ oder $X_2$ einführendes Mittel kommt z.B. in Betracht: $\alpha$,$\beta$-Dibrompropionylchlorid.

Die Verbindungen der Formel (1) werden nach an sich bekannten Methoden hergestellt.

Eine Umwandlungsreaktion, die in manchen Fällen an die Synthese des Farbstoffes der Formel (1) oder an das Kondensationsprodukt aus der Verbindung der Formel (9) mit der den Rest $X_1$ einführenden Verbindung oder der Verbindung der Formel (11) angeschlossen werden kann, ist beispielsweise, dass man einen $\alpha$,$\beta$-Dibrompropionylamino-Rest mit halogenwaserstoffabspaltenden Mitteln, wie z.B. Natriumhydroxid, behandelt, so dass die $\alpha$,$\beta$-Dibrompropionylgruppe in $\alpha$-Bromacryloylgruppe umgewandelt wird.

Die Diazotierung der Amine der Formeln (9) und (11) erfolgt nach an sich bekannten Methoden, z.B. durch Einwirken salpetriger Säure in wässrigmineralsaurer Lösung bei tiefer Temperatur; die Kupplung auf die Kupplungskomponente der Formel (10) erfolgt einmal bei stark saurem und einmal bei schwach saurem bis alkalischem pH-Wert.

Die Kondensation der den Rest $X_1$ und $X_2$ einführenden Verbindungen mit dem Chromophor erfolgt vorzugsweise in wässriger Lösung oder Suspension, bei niedrigen Temperaturen und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert.

Die Azofarbstoffe der Formel (1) eignen sich nach an sich bekannten Methoden zum Färben und Bedrucken, insbesondere von z.B. textilen Fasermaterialien aus Seide und insbesondere Wolle und synthetischen Polyamiden. Man erhält egale Färbungen in schwarzen Tönen mit guten Allgemeinechtheiten, insbesondere guter Reib-, Nass-, Nassreib- und Lichtechtheit.

Aus der EP-A-126 026 ist ein Verfahren zum Färben von Seide bekannt, welches sich von dem erfindungsgemässen Verfahren hinsichtlich der verwendeten Reaktivfarbstoffe unterscheidet.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 10 Teile Kammgarn werden in einem Färbebad, welches auf 400 Teile enthärtetes Wasser von 50° 0,3 Teile Essigsäure (80 %-ig), 0,4 Teile Ammoniumsulfat und 0,2 Teile einer Hilfsmittelmischung, bestehend aus 24 Teilen der anionischen Verbindungen der Formel

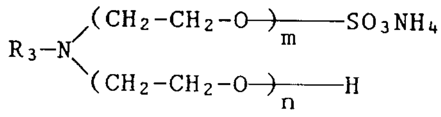
,

$R_3$ = $C_{16}$-$C_{18}$-Kohlenwasserstoffrest: m + n = 7;
24 Teilen Teilen der quaternären Verbindung der Formel

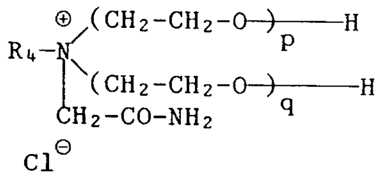
p + q = 7,

$R_4$ = $C_{20-22}$-Kohlenwasserstoffrest;
5 Teilen Ammoniumchlorid
3 Teilen Oxalsäure
44 Teilen Wasser, bezogen auf 100 Teile der Hilfsmittelmischung, enthält während 15 Minuten bei 50 °C vorbehandelt, wobei die Färbeflotte in ständiger Bewegung gehalten wird.

Dann gibt man 0,4 Teile des Farbstoffes der Formel

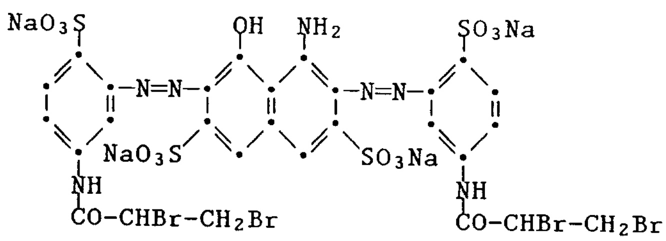
(100)

als wässrige Lösung zu. Der pH-Wert des Färbebades liegt bei 4,5 bis 5. Die Badtemperatur wird dann mit 0,5 bis 1 ° pro Minute auf Kochtemperatur erhöht und 60 bis 90 Minuten bei 98 bis 100 ° gehalten. Das nahezu vollständig ausgezogene Färbebad wird dann auf 80 bis 85 ° abkühlen gelassen und mit ca. 0,5 Teilen einer 25 %-igen wässrigen Ammoniaklösung auf einen pH-Wert von 8 bis 9 eingestellt. Das Färbegut wird während 10 bis 15 Minuten bei 80 bis 85 ° und pH 8 bis 9 gehalten und dann wie üblich gespült und getrocknet.

Man erhält ein blauschwarz gefärbtes Kammgarn von guten Allgemeinechtheiten.

Herstellungsvorschrift des im Beispiel 1 verwendeten Reaktivfarbstoffes der Formel (100)

43,1 Teile des aminogruppenhaltigen Chromophors der Formel

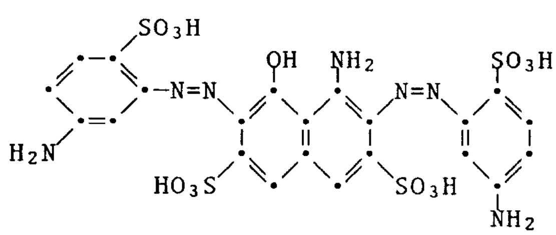

werden in 550 Teilen Wasser neutral gelöst und die Lösung auf 10 ° abgekühlt. Bei dieser Temperatur werden 33,0 Teile 2,3-Dibrompropionylchlorid innert 30 Minuten zugetropft, wobei der pH der Reaktionsmischung durch gleichzeitige Zugabe von 2 n Natriumhydroxydlösung bei 6,5 bis 7,0 gehalten wird. Nach

vollständiger Reaktion wird die Reaktionsmischung geklärt und der gebildete Reaktivfarbstoff bei pH 6,5 durch Einstreuen von Natriumchlorid ausgesalzen, filtriert, gewaschen und im Vakuum getrocknet.

Wenn man wie in Beispiel 1 angegeben verfährt, jedoch anstelle des Farbstoffes der Formel (100) eine äquimolare Menge eines Farbstoffe der Formel

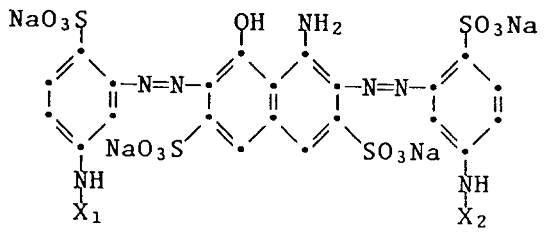

,

wobei $X_1$ und $X_2$ die in der folgenden Tabelle in Spalten 2 und 3 angegebenen Bedeutungen haben, verwendet, so erhält man ebenfalls blauschwarze Färbungen mit guten Echtheiten.

Tabelle

| Beispiel | $X_1$ | $X_2$ |
|---|---|---|
| 2 | $-CO-CBr=CH_2$ | $-CO-CBr=CH_2$ |
| 3 | $-CO-CBr=CH_2$ | $-CO-CHBr-CH_2Br$ |
| 4 | $-CO-CHBr-CH_2Br$ | $-CO-CBr=CH_2$ |

Beispiel 5: 0,2 Mol 1,3-Phenylendiamin-4-sulfonsäure werden in 200 ml Wasser suspendiert, mit 10 ml 10 N Natriumhydroxidlösung neutralisiert und unter gutem Rühren bei 5 bis 10° werden 0,21 Mol $\alpha,\beta$-Dibrompropionylchlorid zugetropft. Durch Zugabe von 32 g Natriumbicarbonat wird der pH-Wert bei 6,5 bis 7,5 gehalten. Das acylierte Produkt fällt aus, die Fällung wird durch Zugabe von Kochsalz vervollständigt und das Produkt abfiltriert. Der feuchte Rückstand enthält 0,182 Mol der monoacylierten Verbindung der Formel

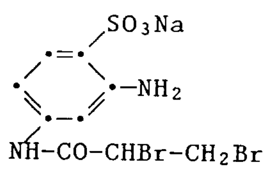

0,182 Mol dieser Verbindung werden in 900 ml Wasser suspendiert. Anschliessend setzt man 0,5 Mol Salzsäure (33 %) zu, und bei einer Temperatur von 10 bis 15° werden 0,2 Mol Natriumnitrit so zugegeben, dass ständig ein Ueberschuss vorhanden ist. Nach 60 Minuten Nachrühren bei 15 bis 20° wird ein geringer Ueberschuss an Natriumnitrit mit Sulfaminsäure zerstört. Die entstandene Suspension enthält das Diazoniumsalz der Formel

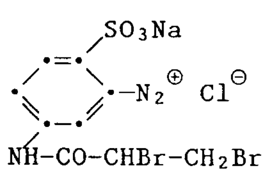

In die Suspension, die 0,182 Mol dieses Diazoniumsalzes enthält werden bei einem pH-Wert von 0,5 bis 1 und bei einer Temperatur von 20 bis 25° 0,082 Mol 1-Amino-8-hydroxynaphthalin-3,6-disulfonsäure als Pulver eingetragen. Durch Zugabe von Natriumacetat wird der pH-Wert im Verlauf von 4 Stunden auf einen Wert von 2,0 gebracht. Das Kupplungsgemisch enthält vorwiegend den Monoazofarbstoff der Formel

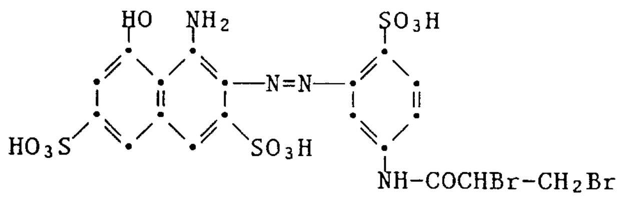

Durch weitere Zugabe von Natriumacetat wird der pH-Wert innerhalb von 4 Stunden auf 4,0 erhöht, wobei sich der Disazofarbstoff bildet, der teilweise ausfällt. Durch Zugabe von KCl wird die Abscheidung vervollständigt. Der Farbstoff wird abfiltriert, mit 20%-iger NaCl-Lösung gewaschen und bei 70° im Vakuum getrocknet. Es werden 123 g Farbstoff der Formel (100) erhalten, der auf Wolle zu tiefen Tönen aufbaut und sehr gute Echtheitseigenschaften aufweist.

Beispiel 6: 0,2 Mol 1,3-Phenylendiamin-4-sulfonsäure werden in 200 ml Wasser suspendiert, mit 20 ml 10 N Natriumhydroxidlösung neutralisiert und unter gutem Rühren bei 5 bis 10° werden 0,21 Mol $\alpha,\beta$-Dibrompropionylchlorid zugetropft. Durch Zugabe von 32 g Natriumbicarbonat wird der pH-Wert bei 6,5 bis 7,5 gehalten. Das acylierte Produkt fällt aus, die Fällung wird durch Zugabe von Kochsalz vervollständigt und das Produkt abfiltriert. Der feuchte Rückstand enthält 0,182 Mol der monoacylierten Verbindung der Formel

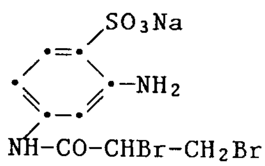

0,182 Mol dieser Verbindung werden in 1800 ml Wasser suspendiert und mit Natriumhydroxid auf pH-Wert 7 gestellt. Unter Kühlung auf 0° werden 0,2 Mol NaOH zugetropft und während 20 Minuten ein pH-Wert von 12 gehalten. Danach wird mit Essigsäure auf pH-Wert 8,5 gestellt und 0,2 Mol Natriumnitrit zugesetzt. Diese Mischung wird auf eine gerührte Mischung bestehend aus 1000 g Eis und 200 ml 30%iger Naphthalinsulfonsäurelösung gegossen. Es entsteht eine gelbe Lösung des Diazoniumsalzes der Formel

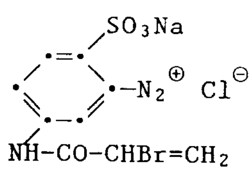

Ein Natriumnitrit-Ueberschuss wird mit Sulfaminsäure zerstört.

In die Lösung, die 0,182 Mol des angegebenen Diazoniumsalzes enthält werden bei einem pH-Wert von 0,5 bis 1 und bei einer Temperatur von 20 bis 25° 0,082 Mol 1-Amino-8-hydroxynaphthalin-3,6-disulfonsäure als Pulver eingetragen. Durch Zugabe von Natriumacetat wird der pH-Wert im Verlauf von 4 Stunden auf einen Wert von 2,0 gebracht. Das Kupplungsgemisch enthält vorwiegend den Monoazofarbstoff der Formel

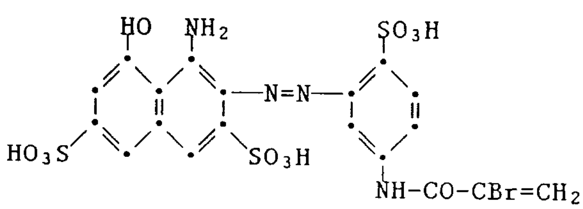

Durch weitere Zugabe von Natriumacetat wird der pH-Wert innerhalb von 4 Stunden auf 4,0 erhöht, wobei sich der Disazofarbstoff bildet, der teilweise ausfällt. Durch Zugabe von NaCl wird die Abscheidung vervollständigt. Der Farbstoff wird abfiltriert, mit 20%-iger NaCl-Lösung gewaschen und bei 70° im Vakuum getrocknet. Es werden 125 g Farbstoff der Formel

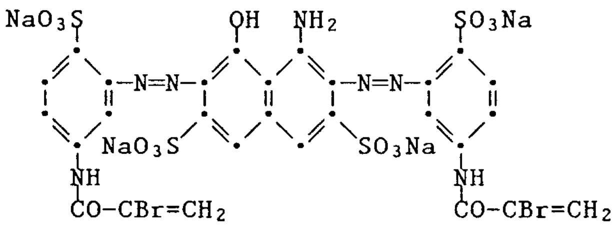

(101)

erhalten, der auf Wolle zu tiefen Tönen aufbaut und sehr gute Nassechtheiten aufweist.

Beispiel 7: 0,1 Mol 1,3-Phenylendiamin-4-sulfonsäure werden in 200 ml Wasser suspendiert, mit 10 ml 10 N Natriumhydroxidlösung neutralisiert und unter gutem Rühren bei 5 bis 10° werden 0,105 Mol $\alpha,\beta$-Dibrompropionylchlorid zugetropft. Durch Zugabe von 16 g Natriumbicarbonat wird der pH-Wert bei 6,5 bis 7,5 gehalten. Das acylierte Produkt fällt aus, die Fällung wird durch Zugabe von Kochsalz vervollständigt und das Produkt abfiltriert. Der feuchte Rückstand enthält 0,092 Mol der monoacylierten Verbindung der Formel

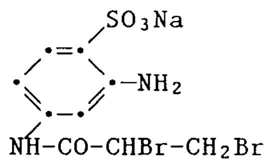

0,092 Mol dieser Verbindung werden in 900 ml Wasser suspendiert. Anschliessend setzt man 0,25 Mol Salzsäure (33 %) zu und bei einer Temperatur von 10 bis 15° werden 0,1 Mol Natriumnitrit so zugegeben, dass ständig ein Ueberschuss vorhanden ist. Nach 60 Minuten Nachrühren bei 15 bis 20° wird ein geringer Ueberschuss an Natriumnitrit mit Sulfaminsäure zerstört. Die entstandene Suspension enthält das Diazoniumsalz der Formel

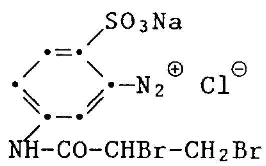

In die Suspension, die 0,092 Mol des angegebenen Diazoniumsalzes enthält werden bei einem pH-Wert von 0,5 bis 1 und bei einer Temperatur von 20 bis 25° 0,082 Mol 1-Amino-8-hydroxynaphthalin-3,6-disulfonsäure als Pulver eingetragen. Durch Zugabe von Natriumacetat wird der pH-Wert im Verlauf von 4 Stunden auf einen Wert von 2,0 gebracht. Das Kupplungsgemisch enthält vorwiegend den Monoazofarbstoff der Formel

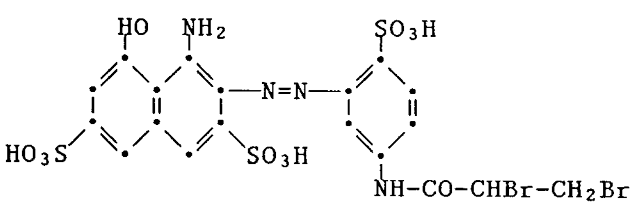

Nach beendeter Kupplung werden 0,092 Mol der gemäss Beispiel 6 hergestellten Diazoniumsalz-Lösung zugegeben. Durch weitere Zugabe von Natriumacetat wird der pH-Wert innerhalb von 4 Stunden auf 4,0 erhöht, wobei sich der Disazofarbstoff bildet, der teilweise ausfällt. Durch Zugabe von KCl wird die Abscheidung vervollständigt. Der Farbstoff wird abfiltriert, mit 20%-iger NaCl-Lösung gewaschen und bei 70° im Vakuum getrocknet. Es werden 117 g Farbstoff der Formel

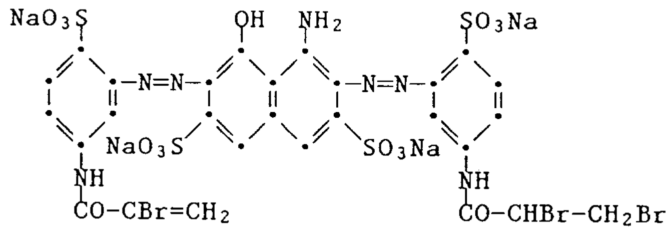

(102)

erhalten, der auf Wolle zu tiefen Tönen aufbaut und sehr gute Nassechtheiten aufweist.

Beispiel 8: 0,1 Mol 1,3-Phenylendiamin-4-sulfonsäure werden in 200 ml Wasser suspendiert, mit 10 ml 10 N Natriumhydroxidlösung neutralisiert und unter gutem Rühren bei 5 bis 10° werden 0,105 Mol $\alpha,\beta$-Dibrompropionylchlorid zugetropft. Durch Zugabe von 16 g Natriumbicarbonat wird der pH-Wert bei 6,5 bis 7,5 gehalten. Das acylierte Produkt fällt aus, die Fällung wird durch Zugabe von Kochsalz vervollständigt und das Produkt abfiltriert. Der feuchte Rückstand enthält 0,092 Mol der monoacylierten Verbindung der Formel

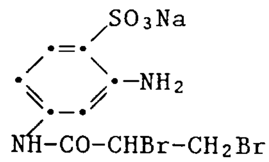

0,092 Mol dieser Verbindung werden in 900 ml Wasser suspendiert und mit Natriumhydroxid auf pH-Wert 7 gestellt. Unter Kühlung auf 0° werden 0,1 Mol NaOH zugetropft und während 20 Minuten ein pH-Wert von 12 gehalten. Danach wird mit Essigsäure auf pH-Wert 8,5 gestellt und 0,1 Mol Natriumnitrit zugesetzt. Diese Mischung wird auf eine gerührte Mischung bestehend aus 500 g Eis und 100 ml 30%iger Naphthalinsulfonsäurelösung gegossen. Es entsteht eine gelbe Lösung des Diazoniumsalzes der Formel

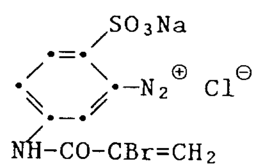

Ein Natriumnitrit-Ueberschuss wird mit Sulfaminsäure zerstört.

In die Lösung, die 0,092 Mol des angegebenen Diazoniumsalzes enthält werden bei einem pH-Wert von 0,5 bis 1 und bei einer Temperatur von 20 bis 25° 0,082 Mol 1-Amino-8-hydroxynaphthalin-3,6-disulfonsäure als Pulver eingetragen. Durch Zugabe von Natriumacetat wird der pH-Wert im Verlauf von 4 Stunden auf einen Wert von 2,0 gebracht. Das Kupplungsgemisch enthält vorwiegend den Monoazofarbstoff der Formel

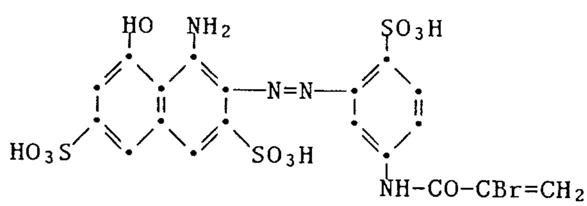

Nach beendeter Kupplung werden 0,92 Mol der gemäss Beispiel 5 hergestellten Diazoniumsalzlösung zugegeben. Durch weitere Zugabe von Natriumacetat wird der pH-Wert innerhalb von 4 Stunden auf 4,0 erhöht, wobei sich der Disazofarbstoff bildet, der teilweise ausfällt. Durch Zugabe von NaCl wird die Abscheidung vervollständigt. Der Farbstoff wird abfiltriert, mit 20%-iger NaCl-Lösung gewaschen und bei 70° im Vakuum getrocknet. Es werden 120 g Farbstoff der Formel

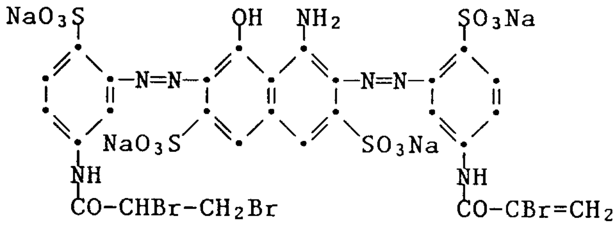

(103)

erhalten, der auf Wolle zu tiefen Tönen aufbaut und sehr gute Nassechtheiten aufweist.

**Patentansprüche**

**1.** Verfahren zum Färben oder Bedrucken von natürlichen oder synthetischen Polyamidfasermaterialien mit sulfogruppenhaltigen Reaktivfarbstoffen, dadurch gekennzeichnet, dass man diese Fasermaterialien mit Reaktivfarbstoffen der Formel

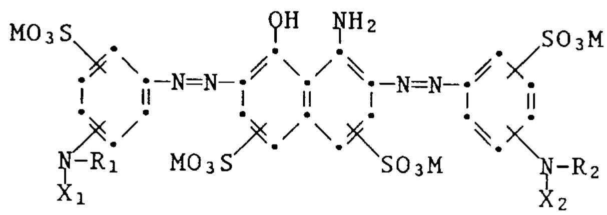

(1),

worin M je ein Kation, $R_1$ und $R_2$ unabhängig voneinander Wasserstoff oder $C_1$-$C_4$-Alkyl und $X_1$ und $X_2$ unabhängig voneinander $\alpha,\beta$-Dibrompropionyl oder $\alpha$-Bromacryloyl bedeuten, aus wässriger Flotte nach dem Ausziehverfahren färbt, oder bedruckt.

**2.** Verfahren gemäss Anspruch 1 dadurch gekennzeichnet, dass man Reaktivfarbstoffe der Formel

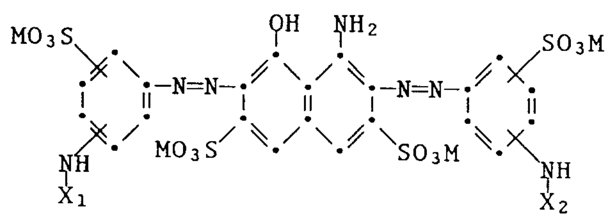

(2),

verwendet, worin M, $X_1$ und $X_2$ die in Anspruch 1 angegebenen Bedeutungen haben.

**3.** Verfahren gemäss Anspruch 2, dadurch gekennzeichnet, dass man Reaktivfarbstoffe verwendet, worin $X_1$ und $X_2$ je $\alpha,\beta$-Dibrompropionyl oder $\alpha$-Bromacryloyl ist.

**4.** Verfahren gemäss einem der Ansprüche 1 bis 3, dadurch gekennzeichnet, dass man einen Reaktivfarbstoff der Formel

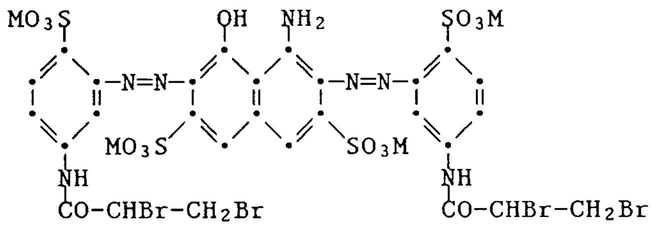

(3)

verwendet, worin M die in Anspruch 1 angegebene Bedeutung hat.

5. Verfahren gemäss einem der Ansprüche 1 bis 4, dadurch gekennzeichnet, dass man Wolle als Fasermaterial einsetzt.

6. Verfahren gemäss einem der Ansprüche 1 bis 5, dadurch gekennzeichnet, dass man Wolle nach der Ausziehmethode färbt.

7. Verfahren gemäss einem der Ansprüche 1 bis 6, dadurch gekennzeichnet, dass man bei einem pH-Wert zwischen 4 und 6, insbesondere zwischen 4,2 und 5,3, und bei einer Temperatur zwischen 80 und 110 °C färbt und anschliessend den pH-Wert des Färbebades alkalisch stellt.

8. Verfahren gemäss einem der Ansprüche 1 bis 7, dadurch gekennzeichnet, dass man in Gegenwart eines Egalisierhilfsmittels färbt.

9. Das nach dem Verfahren gemäss einem der Ansprüche 1 bis 8 gefärbte Fasermaterial.

**Claims**

1. A process for dyeing or printing natural or synthetic polyamide fibre materials with sulfo-containing reactive dyes, which comprises applying to these fibre materials reactive dyes of the formula

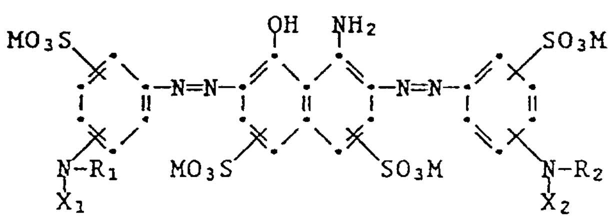

(1)

where each M is a cation, $R_1$ and $R_2$ are independently of each other hydrogen or $C_1$-$C_4$alkyl, and $X_1$ and $X_2$ are independently of each other $\alpha,\beta$-dibromopropionyl or $\alpha$-bromoacryloyl, by dyeing from an aqueous liquor by the exhaust method or by printing.

2. A process according to claim 1, wherein use is made of reactive dyes of the formula

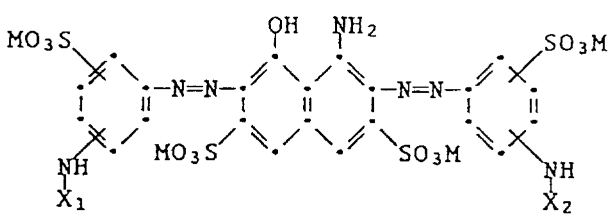

(2)

where M, $X_1$ and $X_2$ are as defined in claim 1.

**3.** A process according to claim 2, wherein use is made of reactive dyes where $X_1$ and $X_2$ are each $\alpha,\beta$-dibromopropionyl or $\alpha$-bromoacryloyl.

**4.** A process according to any one of claims 1 to 3, wherein use is made of a reactive dye of the formula

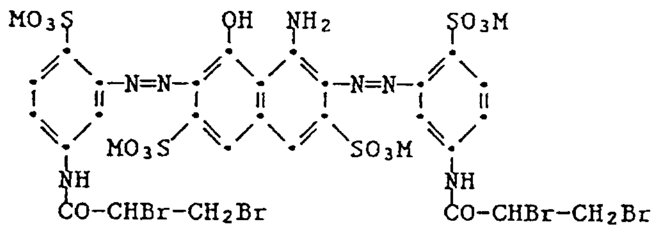

(3)

where M is as defined in claim 1.

**5.** A process according to any one of claims 1 to 4, wherein wool is used as fibre material.

**6.** A process according to any one of claims 1 to 5, wherein wool is dyed by the exhaust method.

**7.** A process according to any one of claims 1 to 6, wherein dyeing is carried out at a pH between 4 and 6, in particular between 4.2 and 5.3, and at a temperature between 80 and 110 °C, and subsequently the pH of the dyebath is made alkaline.

**8.** A process according to any one of claims 1 to 7, wherein dyeing is carried out in the presence of a levelling assistant.

**9.** The fibre material dyed by the process of any one of claims 1 to 8.

## Revendications

**1.** Procédé dé teinture ou d'impression de matières fibreuses en polyamides naturels ou synthétiques, au moyen de colorants réactifs contenant des groupes sulfo, caractérisé en ce que l'on teint ou imprime ces matières fibreuses dans un bain aqueux, selon le procédé par épuisement, avec des colorants réactifs de formule :

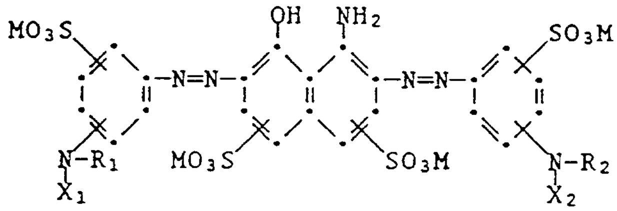

(1)

dans laquelle chaque M représente un cation, $R_1$ et $R_2$ représentent chacun, indépendamment l'un de l'autre, un atome d'hydrogène ou un groupe alkyle en $C_1$-$C_4$, et $X_1$ et $x_2$ représentent chacun, indépendamment l'un de l'autre, un groupe $\alpha,\beta$-dibromopropionyle ou $\alpha$-bromoacryloyle.

2. Procédé selon la revendication 1, caractérisé en ce que l'on utilise des colorants réactifs de formule :

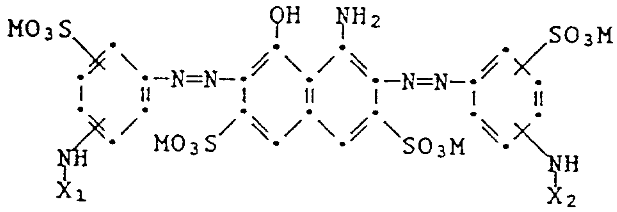

(2)

dans laquelle M, $x_1$ et $X_2$ ont les significations indiquées dans la revendication 1.

3. Procédé selon la revendication 2, caractérisé en ce que l'on utilise des colorants réactifs dans lesquels $X_1$ et $X_2$ représentent chacun un groupe $\alpha,\beta$-dibromopropionyle ou un groupe $\alpha$-bromoacryloyle.

4. Procédé selon l'une quelconque des revendications 1 à 3, caractérisé en ce que l'on utilise un colorant réactif de formule :

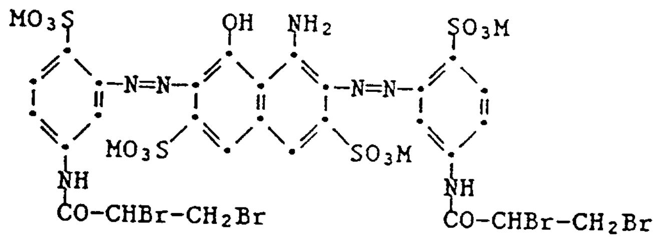

(3)

dans laquelle M a la signification indiquée dans la revendication 1.

5. Procédé selon l'une quelconque des revendications 1 à 4, caractérisé en ce que l'on utilise de la laine comme matière fibreuse.

6. Procédé selon l'une quelconque des revendications 1 à 5, caractérisé en ce que l'on teint de la laine par le procédé par épuisement.

7. Procédé selon l'une quelconque des revendications 1 à 6, caractérisé en ce que l'on teint à un pH compris entre 4 et 6, en particulier à un pH compris entre 4,2 et 5,3, et à une température comprise entre 80 et 110 °C, et règle ensuite le pH du bain de teinture de façon à le rendre alcalin.

8. Procédé selon l'une quelconque des revendications 1 à 7, caractérisé en ce que l'on teint en présence d'un agent d'unisson.

9. Matière fibreuse teinte par le procédé selon l'une quelconque des revendications 1 à 8.